# EUROPEAN PATENT APPLICATION

(11) **EP 0 985 338 A1**
(43) Date of publication of application: **15.03.2000**
(21) Application number: 98963570.1
(22) Date of filing: 30.12.1998
(51) Int. Cl.: A01G 9/24

(54) **LARGE WINDOW FOR GREEN HOUSE**

(30) Priority: 02.03.1998 ES 9800572 U
(71) Applicant: LS Horticultura Espana S.A., 30730 San Javier (ES)
(72) Inventor: ESTEVEZ NAVARRETE, Gerardo, E-30730 San Javier (ES)
(74) Representative: Perez Bonal, Bernardo
(86) International application number: ES9800362
(87) International publication number: WO9944412

(57) **Abstract**

Large window for green house, the large window being installed preferably on the central upper part of multitunnel green houses. It can be operated and moved by means of a hydraulic cylinder (3) or any other actuation means, the movement being transmitted to a drive rod (1) which, in turn, transmits the motion to the driven rod (14) which produces the opening of the central part having at its periphery an omega profile (11) which sustain the upper part (6); it is provided with means intended to support the rod (1) and the hydraulic cylinder (3) which, together with the arms (4, 12 and 13), form a rigid structure to support the hydraulic cylinder (3), the driving rod (1) and the driven rod (14).

## Description

### OBJECT OF THE INVENTION

The object of the present invention is a greenhouse window which has considerable advantages and innovations with respect to presently employed greenhouse constructions.

More specifically, the invention involves an operating system for the window in which opening and closing is achieved by a hydraulic system or any other suitable system, so that when opened an overhead ventilation system is provided while a resistant seal is achieved when closed.

### BACKGROUND OF THE INVENTION

Presently, greenhouse windows are opened and closed by mechanisms which do not provide much resistance, not providing the seal required in a greenhouse.

### DESCRIPTION OF THE INVENTION

The greenhouse window is placed on the top central area of the greenhouse where it is applied, and is characterised by being connected at its bottom to an arm or rod driven by a hydraulic cylinder or any other driving mechanism, so that the rod transmits an angular upwards motion which is synchronised by means of the sides of a special omega shaped profile to a jointed unit which is carried by the motion of the driving rod and which uses the force transmitted by the two sides of the profile, transforming it into a vertical elevation of the entire window.

The omega shaped profile which interconnects the driven rods acts as a force transmission system for the window, as a top of the seal when the window is shut and as support for a plastic film which encloses it.

The special characteristic of this ventilation system lies in the simplicity of the elements of which it consists and in the manner in which the elevation force is transmitted to the window, from the driving rod to the driven rods, which pivot on the joint of their support, while applying the force only on an end of the window, achieving an excellent level of safety against wind and air renewal forces inside the greenhouse.

As a complement of the description being made and in order to aid a better comprehension of the characteristics of the invention according to a preferred embodiment of the same, a set of drawings is enclosed as an integral part of said description where for purposes of illustration and in a non-limiting nature the more relevant details of the invention are shown.

### DESCRIPTION OF THE DRAWINGS

Figure 1 shows an elevation view of a sectional greenhouse construction provided with the window system which is the object of the present invention.
Figure 2 shows an enlargement of figure 1 in an identical view with the window open, where the dotted line shows the trajectory towards the closed position.
Figure 3 shows an enlargement of figure 1 in a side view, where the dotted line shows the trajectory towards the open position.
Figure 4 shows an enlargement of figure 2, indicating the top part of the window rod.
Figure 5 shows an enlargement of figure 3, indicating the part of the rod support on the greenhouse arch.

### PREFERRED EMBODIMENT OF THE INVENTION

Figure 1 shows a sectional greenhouse construction of the multitunnel type, where at the top of the centre of the arch is shown the proposed window in its open position, as drive rod (1) is raised.

Figure 2 shows a detail of the open window, where drive rod (1) is joined to special profiles (11) which are tensionally attached to a plastic film (6), securing it with a polystyrene plug (9) inserted under pressure in a support (7), with the special characteristic that plastic film (6) is coupled to the arc of tube (5) by attachment to a normal omega shaped profile (8) and its polystyrene plug (9).

The same figure shows the rod support (2) which is attached to the arc of the tube, so that rod (1) is supported by it, which as it is the first of the window, drives the shaft about which the rod turns in support (2)with two arms (4) supporting on one side the hydraulic cylinder (3), as there is a hydraulic drive in this particular example, although any other drive system may be used.

Figure 3 shows a side view of an enlarged representation of the open window in a dotted line and the closed window in a solid line.

Said figure shows the moving parts which act on drive rod (1), propelled by hydraulic cylinder (3) which carries out the motion alternately, due to the pressure produced by a hydraulic system and transmitted to it to such end, so that the driven rod (14) which makes up the entire window performs the same turning motion periodically, and therefore is raised along with the drive rod since the motion of the two special profiles (11) is transmitted to it.

In this same figure is shown the set of paired arms (4) and (12) which secure the hydraulic cylinder, as well as arms (13) which close the support structure on the top.

Figure 4 shows an enlargement of figure 2, where one can see the special profile (11) characteristic of the invention, which is the element which transmits the force from the drive rod to the driven rods, which are the support of the window, sealing top when ventilation is closed, as it rests its lower part on the plastic cover which covers the arch, and supports the plastic film which closes the window.

Figure 5 shows an enlargement of figure 3, where one can see the general support for all rods, as well as body (10) which secures the rod support on the arched tube (5).

Within its characterisation, the invention may be reduced to practice in other embodiments than the one given as example in the description, which shall also be covered by the protection sought. Likewise, it may be constructed in any shape and size and with the more suitable materials, as it is all within the scope of the claims.

## Claims

1. Greenhouse window, preferably to install on the top area of multitunnel greenhouses, characterised in that the motion of the accessible area is performed by a hydraulic cylinder (3), or any other suitable driving method where said cylinder transmits the motion to a rod (1) which, as it moves, propelled by the hydraulic cylinder, causes the central area to open, which has along its perimeter a special omega shaped outline (11) which supports top part (6).

2. Greenhouse window as in claim 1, characterised in that the rod support (2) is attached to the tube of arch (5) and to said support is attached rod (1).

3. Greenhouse window as in claim 1, characterised in that drive rod (1) and driven rod (14) allow displacement of profiles (11), which make up the support of the central window.

4. Greenhouse window as in claim 1, characterised in that the set of arms (4), (12) and (13) form a rigid structure which is attached to rod support (2) and allow to secure the hydraulic cylinder.
